Europäisches Patentamt

European Patent Office

Office européen des brevets

(11) Numéro de publication: **0 207 555**
**B1**

(12) **FASCICULE DE BREVET EUROPEEN**

(45) Date de publication du fascicule du brevet:
27.12.89

(21) Numéro de dépôt: **86201071.7**

(22) Date de dépôt: **19.06.86**

(51) Int. Cl.⁴: **B01D 25/12**

(54) **Dispositif de filtrage.**

(30) Priorité: **02.07.85 LU 85987**
**07.10.85 LU 86109**

(43) Date de publication de la demande:
**07.01.87 Bulletin 87/2**

(45) Mention de la délivrance du brevet:
**27.12.89 Bulletin 89/52**

(84) Etats contractants désignés:
**AT BE CH DE FR GB IT LI LU NL SE**

(56) Documents cités:
**DE-A- 2 251 265**
**DE-B- 1 218 999**
**FR-A- 2 292 508**
**US-A- 3 073 238**

**CHEMIE INGENIEUR TECHNIK,**
**vol. 36, no. 12, décembre 1964, pages 1287-1288, Weinheim, DE; S. WERNER et al.: "Filterapparate"**

(73) Titulaire: **BREWMAR, société anonyme, Chaussée de Wavre, 1160, B-Auderghem(BE)**
Titulaire: **"Société belge de Filtration", en abrégé " S.B.F.", et en néerlandais "Belgische Filtratie Vereniging", Association sans but lucratif 1, Voie Minckelers, Louvain-la-Neuve(Ottignies)(BE)**

(72) Inventeur: **Meurens, Jacques, Rue de Richelle 139, B-4546 Visé(BE)**
Inventeur: **Eyben, Donald, Guido Gezellelaan 4, B-3200 Kessel-Lo(BE)**
Inventeur: **Hermia, Jacques, Rue Saint Martin 22, B-5864 Walhain(BE)**
Inventeur: **Rahier, Georges, Quai Saint Léonard 22 Bte 103, B-4000 Liège(BE)**

(74) Mandataire: **Pirson, Jean et al, c/o Bureau Gevers, S.A. rue de Livourne 7 bte 1, B-1050 Bruxelles(BE)**

ACTORUM AG

## Description

L'invention concerne un dispositif de filtrage conforme au préambule de la revendication 1.

On connaît des filtres-presses de ce type, dans lesquels chaque compartiment de matière à filtrer est formé entre, d'une part, une membrane flexible et, d'autre part, une toile ou serviette filtrante. Celle-ci repose sur une plaque cannelée rigide et forme avec elle le compartiment de récolte du filtrat (voir par exemple la DE-B 1 218 999 et le filtre-presse LAROX[R] CF). Dans ce dernier, la toile ou serviette filtrante doit être tendue pour sortir le gâteau de filtration hors de la plaque, puis elle est déroulée vers l'extérieur pour permettre son évacuation, ce qui nécessite un appareillage compliqué et coûteux. Enfin, les toiles filtrantes sont en matière déformable, par exemple en matière textile, et, dans les conditions auxquelles elles sont soumises, elles subissent une usure rapide et doivent être fréquemment remplacées.

On connaît aussi des filtres-presses à étape de compression comportant d'épaisses plaques poreuses en métal fritté comme moyens de filtration et des membranes flexibles, gonflables, destinées à réduire le volume des compartiments de matière à filtrer pendant la compression (v. DE-A 2 251 265). Ces filtres-presses sont absolument inapplicables dans la filtration de liquides fermentescibles, tels que du moût de brasserie à cause de la capacité de rétention du liquide élevée des plaques poreuses, du danger de fermentation à l'intérieur des pores du métal et du risque d'obstruction des pores par les particules solides de la matière à filtrer.

On connaît aussi des filtres-presses appelés à plaques ou à plateaux chambrés (voir par exemple la FR-A 2 384 526, la FR-A 2 398 529, le US-A 3 926 811 et la EP-A 81 715). Dans ces filtres-presses chaque chambre de filtrage est formée par deux plaques de filtrage assemblées, chaque plaque comprenant un cadre périphérique et deux parois frontales dont l'une au moins est une membrane flexible. Chaque membrane flexible supporte un moyen de filtration sous la forme d'une serviette ou toile filtrante déplaçable avec la membrane, le compartiment de récolte du filtrat étant formé entre la toile filtrante et un profilage prévu dans la membrane flexible pour drainer le liquide filtré. Le compartiment de matière à filtrer est formé entre deux serviettes ou toiles filtrantes opposées ou entre une telle serviette ou toile et une paroi fixe. Les membranes flexibles sont déplaçables partiellement vers le compartiment de matière à filtrer sous l'action d'un fluide sous pression, en formant ainsi un moyen de réduction de ce compartiment. Ces membranes sont fixées au cadre à leur périphérie et, dans le cas où l'alimentation se fait par le centre, également au conduit d'alimentation. Ces parois frontales, coûteuses car demandant un usinage très compliqué pour leur permettre d'être efficaces, présentent un vieillissement rapide dans les conditions auxquelles elles sont soumises. De plus, elles ne permettent généralement qu'un déplacement axial tout à fait insuffisant dans certains domaines comme par exemple la brasserie où l'épaisseur des compartiments de matière à filtrer doit pouvoir avantageusement être de l'ordre de 30 à 80 mm. Le gâteau de filtration obtenu dans les chambres de filtrage peut adhérer aisément aux toiles filtrantes, elles aussi en matière déformable. Enfin, des dispositifs compliqués et coûteux de séparation du gâteux de filtration après le débâtissage du flitre-presse sont souvent nécessaires.

On connaît également des filtres-presses dans lesquels chaque compartiment de matière à filtrer est formé d'une poche de filtration en matière déformable, chaque compartiment de récolte du filtrant étant formé entre un côté de cette poche et une plaque rigide. Les plaques sont agencées entre elles de manière à pouvoir être comprimées l'une vers l'autre sous l'action de vérins hydrauliques de grande puissance (v. FR-A 2 506 217).

On connaît enfin, en particulier pour la filtration de moût de brasserie, des filtres-presses de type courant, c'est-à-dire permettant uniquement un filtrage, sans étape de compression (voir par exemple le BE-A 844 362 et le BE-A 886 465). Ces filtres-presses peuvent comprendre, pour former les chambres de filtrage, des cadres vides interposés entre les plaques supportant les moyens de filtration. Ceux-ci sont toujours des serviettes ou toiles filtrantes qui peuvent éventuellement être supportées sur des tamis métalliques à large maille servant de moyens de support des moyens de filtration. Ces dispositifs présentent évidemment une moins grande efficacité étant donné l'absence de compression du gâteau de filtration.

Il est par ailleurs connu de fabriquer des treillis rigides en fils métalliques (v. par exemple le BE-A 838 396 et la FR-A 2 292 508) et de les appliquer dans des filtres par exemple du type crépines (v. par exemple le BE-A 838 396 et le FR-A 2 088 713) ou comme supports de tissu filtrant (v. par exemple la DE-A 2 633 372).

La présente invention a pour but d'éviter les problèmes posés par les dispositifs connus et de mettre au point un dispositif de filtrage du type mentionné au début qui soit simple, peu coûteux et très robuste, et qui soit applicable même dans des cas où les chambres de filtrage ont besoin d'atteindre de grandes épaisseurs, comme cela est le cas lors du filtrage de moût de brasserie.

On prévoit, suivant l'invention, un dispositif tel que décrit au début et présentant les particularités de la partie caractérisante de la revendication 1.

Suivant une forme de réalisation avantageuse de l'invention, la face lisse et plane des moyens de filtration est disposée dans un plan perpendiculaire à l'axe de la chambre de filtrage correspondante. Les compartiments de matière à filtrer peuvent avantageusement avoir une dimension axiale allant de 30 à 80 mm.

Suivant une forme perfectionnée de réalisation de l'invention, chaque compartiment de matière à filtrer est limité frontalement entre un moyen de filtration et un moyen de réduction de volume du compartiment de matière à filtrer.

Suivant une forme préférée de réalisation de l'invention, une cloison ou plaque supportant les moyens de réduction de volume des compartiments de matière à filtrer de deux chambres de filtrage adjacentes sépare ces deux chambres, de façon à permettre le passage d'une alimentation en air comprimé entre ces moyens de réduction de volume et à éviter un déplacement inadéquat de ceux-ci. Avantageusement, le ou les entrées pour la matière à filtrer sont agencés dans leur compartiment de matière à filtrer de façon à introduire celle-ci tangentiellement aux moyens de réduction de volume.

Suivant une autre forme de réalisation de l'invention, chaque compartiment de matière à filtrer est limité frontalement entre un moyen de filtration susdit, servant simultanément de moyen de réduction du volume de ce compartiment, et un autre moyen de filtration ou respectivement une cloison ou paroi frontale rigide.

D'autres détails et particularités de l'invention ressortiront de la description donnée ci-après, à titre non limitatif et avec référence aux dessins annexés.

La figure 1 représente une vue en perspective, schématique, après débâtissage, des cadres et plaques formant une chambre de filtrage d'un filtre-presse suivant l'invention. Les guides et supports de ces cadres et plaques, connus en soi, n'ont pas été représentés pour permettre une lecture plus aisée.

La figure 2 représente une vue en coupe axiale d'une variante de réalisation, à l'état assemblé du filtre-presse, dans une étape précédant la compression.

La figure 3 représente une vue en coupe partielle semblable à la figure 2, dans l'étape de compression.

La figure 4 représente une vue en coupe partielle, semblable aux figures 2 et 3, dans l'étape d'évacuation du gâteau de filtration.

La figure 5 représente une vue en coupe partielle d'un moyen de filtration suivant l'invention, suivant la ligne V-V de la figure1.

La figure 6 représente une vue en coupe axiale d'une autre variante de réalisation, à l'état assemblé du filtre-presse, dans une étape précédant la compression.

La figure 7 représente une vue en coupe axiale d'une plaque de filtrage d'encore une autre variante de réalisation de dispositif suivant l'invention.

La figure 8 représente une vue en coupe axiale partielle d'encore une autre variante de réalisation de dispositif suivant l'invention, dans l'étape de compression.

La figure 9 représente une vue en coupe axiale partielle de la figure 8, dans l'étape d'évacuation du gâteau de filtration.

Sur les différents dessins, les éléments identiques ou analogues sont désignés par les mêmes références.

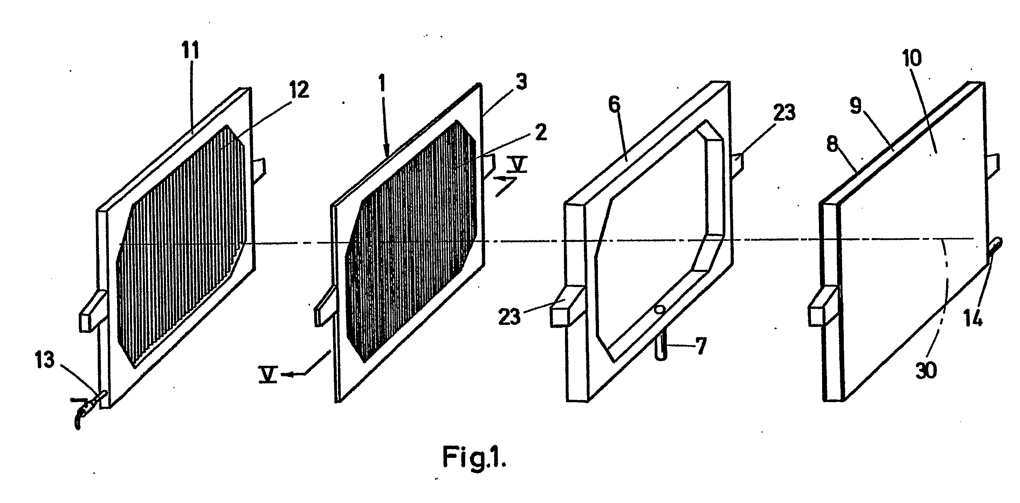

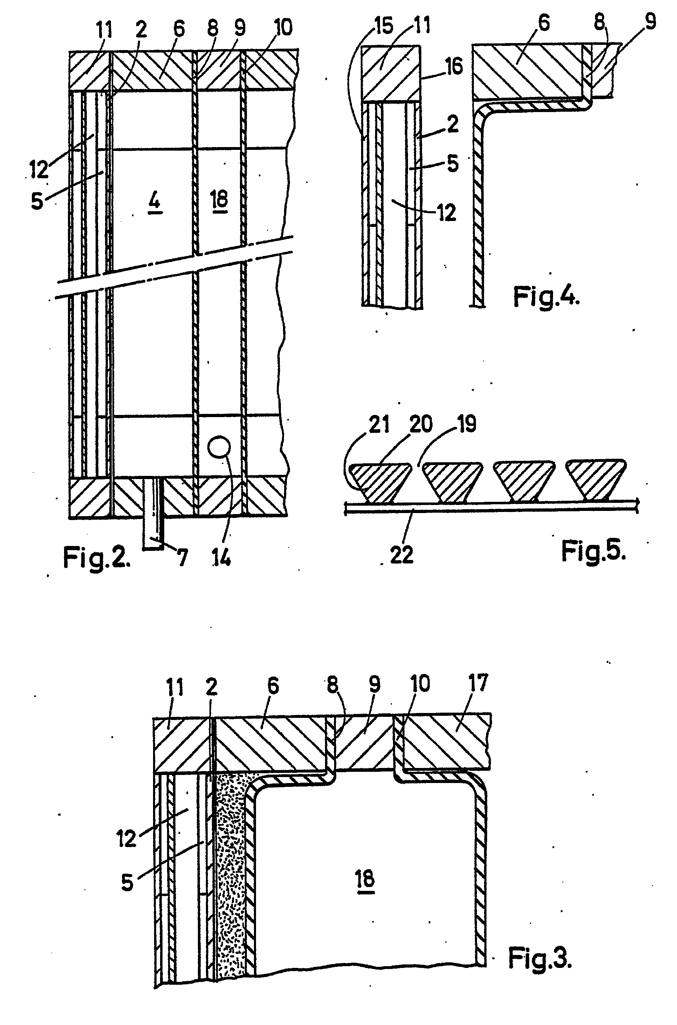

Ainsi qu'il ressort de la figure 1, chaque chambre de filtrage du filtre-presse comprend un moyen de filtration 1 indéformable dans les conditions de fonctionnement du filtre-presse, par exemple sous la forme d'un treillis métallique 2 supporté sur un cadre 3, ce moyen de filtration divisant la chambre de filtrage en un compartiment de matière à filtrer 4 (voir figure 2) et un compartiment de récolte 5 du filtrat ou du soluté de lavage (voir figure 2).

Le compartiment de matière à filtrer 4 est, dans l'exemple de réalisation suivant la figure 1, formé entre le treillis métallique 2, un cadre vide indépendant 6 dans lequel débouche un conduit d'alimentation 7, pour la matière à filtrer, et une membrane élastique 8 en forme de simple feuille, par exemple en caoutchouc naturel de qualité alimentaire, et fixée sur un cadre de support 9. Ce dernier, dans l'exemple de réalisation illustré sur la figure 1, est fermé sur son côté frontal opposé par une seconde membrane 10 qui va servir dans la chambre de filtrage adjacente. Dans la chambre 18 (voir figure 2) formée entre ces deux membranes 8 et 10 et leur cadre de support 9 débouche un conduit d'amenée 14 de fluide sous pression, par exemple d'air comprimé.

Le compartiment de récolte du filtrat 5 est, dans l'exemple de réalisation de la figure 1, enfermé entre le treillis métallique 2 et une plaque ou panneau comportant un cadre 11 fermé par une cloison 12, disposée à faible distance du côté frontal du cadre 11 et présentant de préférence un profilage, par exemple des rainures, pour drainer le liquide filtré vers le bas, où il est recueilli, d'une manière connue en soi, dans le cadre 11 et évacué par le conduit de sortie 13.

Comme on peut le voir, chacun des cadres 3, 6, 9 et 11 est pourvu de deux saillies latérales 23 pour leur support sur des moyens de support et de guidage connus et non représentés. De plus, lors du débâtissage, c'est-à-dire dans la position représentée sur la figure 1, tous ces cadres, simplement appliqués l'un contre l'autre pendant le fonctionnement du filtre-presse, peuvent se séparer les uns des autres.

Sur les figures 2 à 4, est représentée une autre forme de réalisation de l'invention qui se distingue principalement de la précédente par le fait que le moyen de filtration 2 est fixé directement sur le cadre 11 et que le cadre 6 reste, pendant toutes les opérations, y compris le débâtissage, solidaire du cadre 9. On pourrait envisager qu'il soit d'une pièce avec ce dernier ou qu'il reste solidaire de ce dernier, par exemple pour boulonnage, mais qu'il puisse en être séparé, en cas de nécessité, par exemple lorsque l'on doit accéder à la membrane 8.

Comme on peut le voir sur les figures 2 à 4, la cloison de séparation 12 entre deux chambres de filtrage est formée d'une structure en matière rigide, par exemple une tôle en acier inoxydable. Cette tôle est fixée à l'intérieur du cadre 11 de manière à le diviser axialement en deux. Sur le cadre 11 le treillis métallique est fixé à une de ses extrémités frontales, de manière à être à fleur du côté frontal 16 (voir figure 4) du cadre 11. De même à son autre extrémité frontale, le moyen de filtration 15 de la chambre de filtrage voisine est fixé de façon identique.

Comme on peut le voir sur les figures 2 à 4, le cadre 9 est solidaire du cadre vide 6, la membrane souple 8 étant enserrée entre les deux cadres. De même la membrane 10 est enserrée entre le cadre 9 et le cadre vide 17 de la chambre de filtrage voisine. Entre elles est formée à l'intérieur du cadre 9 une chambre à fluide sous pression 18. Celle-ci pourrait évidemment être également divisée en deux soit par une cloison étanche soit par une cloison devant éviter un flottement des membranes. Les membranes servent de moyens de réduction du volume des compartiments de matière à filtrer lorsqu'elles sont gonflées par entrée de fluide sous pression dans la chambre 18. Elles peuvent aussi, ainsi qu'on le verra dans la suite, servir de moyens d'évacuation du gâteau de filtration hors de filtre-presse.

Les membranes dans les dispositifs suivant l'invention peuvent donc être de simples feuilles de caoutchouc très souple, par exemple de caoutchouc naturel de qualité alimentaire, de façon à pouvoir sous l'action du fluide sous pression s'étendre sans problème en direction axiale sur une distance de l'ordre de 30 à 80 mm. Le matériau utilisé est donc bon marché; il ne nécessite pas d'usinage particulier pour obtenir un profilé spécial ou des perforations, et les membranes peuvent être fixées aisément sur le cadre 9, par exemple par collage sur ses faces frontales. Elles peuvent aussi être aisément remplacées, même dans le cas illustré sur la figure 2, où il suffit de déboulonner les deux cadres 6 et 9 et d'enlever la membrane 8 enserrée entre eux. Ce remplacement ne nécessite donc en aucune manière un remplacement de tout le cadre supportant la membrane, comme c'est le cas dans des dispositifs connus.

Dans les dispositifs suivant l'invention on prévoit, comme moyen de filtration, uniquement un milieu filtrant résistant et indéformable dans les conditions de filtration et de compression et présentant une position relative par rapport à l'axe 30 (voir figure 1) des chambres de filtrage qui est identique dans toutes les positions du moyen de filtration pendant toutes les étapes du filtrage.

Ce milieu filtrant présente du côté compartiment de matière à filtrer, en dehors d'ouvertures de passage 19 pour le filtrat, une face 20 lisse et plane. Sur la figure 5 est illustrée une forme de réalisation non limitative d'un tel milieu filtrant. Il est constitué d'un treillis en acier inoxydable en deux strates, les fils 21 du compartiment de matière à filtrer étant disposés sensiblement parallèlement l'un à autre à une distance comprise entre 50 et 400 μm. Les faces 20 entre les ouvertures de passage 19 ainsi formées sont aplaties et agencées de façon à former un seul plan. Ces fils sont retenus ensemble par des fils sous-jacents transversaux 22 qui sont soudés à eux et sont disposés à une distance plus importante l'un de l'autre. Les ouvertures de passage 19 vont en s'élargissant en direction du compartiment de récolte du filtrat. Cela permet de retenir en surface les particules de dimension supérieure aux ouvertures de passage et d'empêcher les particules passant à travers ces dernières de les obstruer. Comme treillis de ce genre, on connaît un treillis mis sur le marché par la firme BEKAERT sous le nom de Trislot[R] et décrit notamment, comme on l'a déjà dit, dans le BE-A-838396, la FR-A-2292508, le FR-A-2088713 et la DE-A-2633372. On utilise donc dans les filtres-presses suivant l'invention des moyens de filtration très résistants aux conditions de filtrage et de compression et qui ne subissent aucune déformation lors de leur utilisation. Ils ne doivent quasiment jamais être échangés, ce qui évite les frais de remplacement fréquents des toiles ou serviettes filtrantes des dispositifs connus. Le gâteau de filtration n'adhère presque pas sur leur surface ce qui facilite le débâtissage et l'évacuation du gâteau de filtration. Il faut noter qu'au cours du débâtissage le moyen de filtration est séparé des autres éléments par simple translation.

Le fonctionnement du dispositif suivant l'invention, illustré sur les figures 2 à 4, va à présent être décrit de manière plus détaillée :

Sur la figure 2, les cadres et plaques du filtre-presse viennent d'être assemblés et pressés l'un contre l'autre d'une manière connue et non représentée. La matière à filtrer est alors introduite par le conduit 7 dans le compartiment 4 du cadre vide 6, sous une certaine pression. La filtration se produit alors au travers du treillis 2, la phase liquide s'écoulant à travers ce dernier et étant recueillie dans la chambre de récolte 5 puis évacuée par le conduit de sortie 13. La phase solide est par contre retenue par le treillis 2. Dans le domaine de la brasserie, il est souhaitable que le compartiment 4 ait une certaine épaisseur, de préférence allant jusqu'à 80 mm. En effet, il est souhaitable qu'une petite épaisseur de matière solide ait le temps de se déposer contre le treillis pour que la filtration soit totalement efficace.

Ensuite, de l'eau de lavage est introduite dans l'appareil par exemple par le même conduit 7 et le soluté de lavage passé à travers le treillis 2 est récolté dans la chambre de récolte 5 où il est drainé vers le bas par la cloison 12 et évacué par le conduit de sortie 13.

Lorsqu'une quantité optimale de soluté à été recueillie, la compression du gâteau peut débuter (voir figure 3). Cette compression est provoquée par le gonflement de la membrane élastique, obtenu par l'introduction de fluide sous pression à l'intérieur de la chambre 18. Lors de ce gonflement, la membrane se déforme et se déplace en direction du treillis de filtration 2 ce que a pour effet de réduire le volume du compartiment de matière solide et de comprimer la phase solide contre le treillis de filtration 2. Etant donné sa grande souplesse, la membrane se conforme très bien à la périphérie interne du cadre vide 6. Pendant cette opération, le conduit 7 est fermé, et il se forme entre la membrane et le treillis, un gâteau comprimé tel que représenté en pointillés sur la figure 3.

Sur la figure 4, est représenté le débâtissage du filtre-presse. Au cours de cette opération, on produit un écartement par translation axiale entre le treillis de filtration et les autres éléments formant le compartiment de matière à filtrer, c'est-à-dire le cadre vide 6 et la membrane 8. Il n'y a donc aucune déformation de ces éléments lors du débâtissage ou décollement entre eux par arrachage, comme c'est le cas dans des dispositifs connus utilisant des toiles filtrantes.

Dans l'exemple de réalisation illustré sur les figures 2 à 4, l'évacuation du gâteau de filtration peut s'effectuer par un gonflement supplémentaire de la membrane 8, comme représenté sur la figure 4, la membrane repoussant le gâteau de filtration hors du cadre 4. Le gâteau tombe alors dans une trémie non représentée.

Dans l'exemple de réalisation illustré sur la figure 1, lors du débâtissage, le treillis métallique 2 supporté sur son propre cadre 3 et le cadre vide 6 sont désolidarisés des autres cadres 11 et 9. Ensuite, une inclinaison est conférée au cadre 6, ou il est soumis à un choc ou à des vibrations et le gâteau de filtration tombe dans une trémie non représentée.

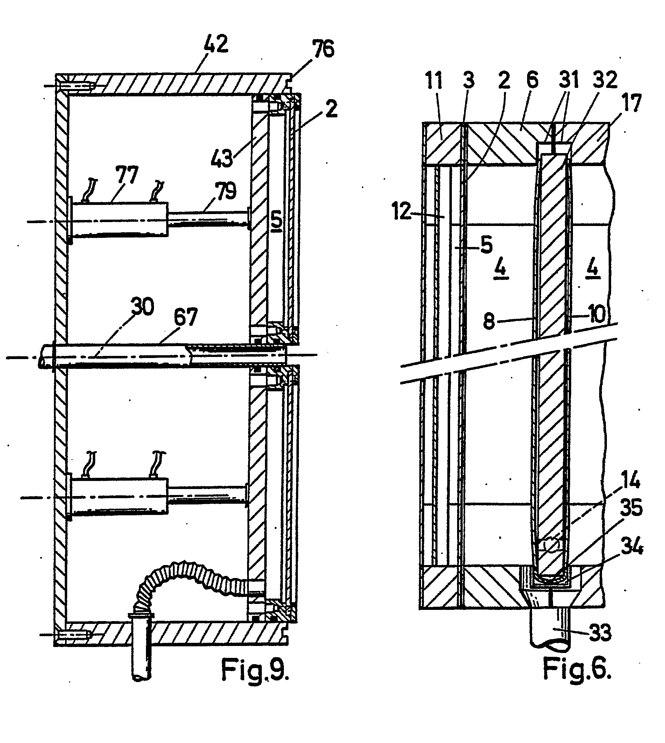

Le dispositif illustré sur la figure 6 est très semblable à ceux décrits précédemment. La différence essentielle consiste à prévoir des cadres vides 6, 17 présentant une entaille périphérique interne 31, sur l'un de leurs bords. Deux cadres vides 6, 17 de deux chambres de filtrage adjacents sont agencés avec leur entaille respective en vis-à-vis et forment ainsi lors de l'assemblage une rainure périphérique. Dans celle-ci peut être agencée une cloison ou plaque de support 32 qui sépare les deux chambres de filtrage et qui supporte sur chacune de ses faces une membrane 8, 10 en caoutchouc naturel, fixée périphériquement sur elle. La rainure périphérique forme donc un volume entre les deux cadres 6,17 dans lequel sont emprisonnées les membranes élastiques 8, 10 et la plaque de support rigide 32 qui évite aux membranes un déplacement inadéquat.

Il faut également prévoir entre les deux cadres 6, 17 et dans la plaque de support 32 un évidement permettant le passage de l'alimentation 14 en air comprimé, nécessaire au gonflement des membranes.

Dans cet exemple de réalisation, l'introduction de la matière à filtrer se fait par une entrée unique 33 pour les deux chambres de filtrage. La matière à filtrer est ainsi introduite tangentiellement aux membranes élastiques 8 et 10, ce qui réduit au minimum le volume mort des compartiments de matière à filtrer 4. La rainure formée par les entailles 31 est évidemment avantageusement obturée dans le sens périphérique, par rapport à l'entrée 33, par exemple par des plaquettes étanches 34 conformées pour recevoir la plaque de support 32. Un recouvrement 35 peut aussi protéger la partie basse de la plaque de support 32 contre l'abrasion résultant de l'introduction de la matière à filtrer.

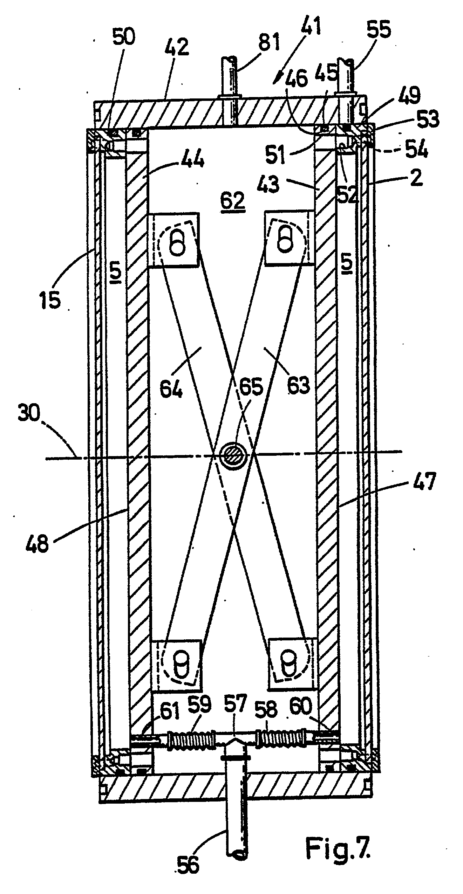

Ainsi qu'il ressort de la figure 7, la plaque de filtrage 41 représentée comprend un cadre ou module périphérique 42 en matière rigide, qui en section transversale peut présenter une configuration quelconque, par exemple circulaire ou de polygone régulier ou irrégulier, ainsi que deux plaques frontales 43 et 44. Dans l'exemple illustré, les deux parois frontales 43 et 44 sont conformément à l'invention agencées dans la plaque de filtrage de manière à pouvoir coulisser axialement dans le cadre périphérique 42.

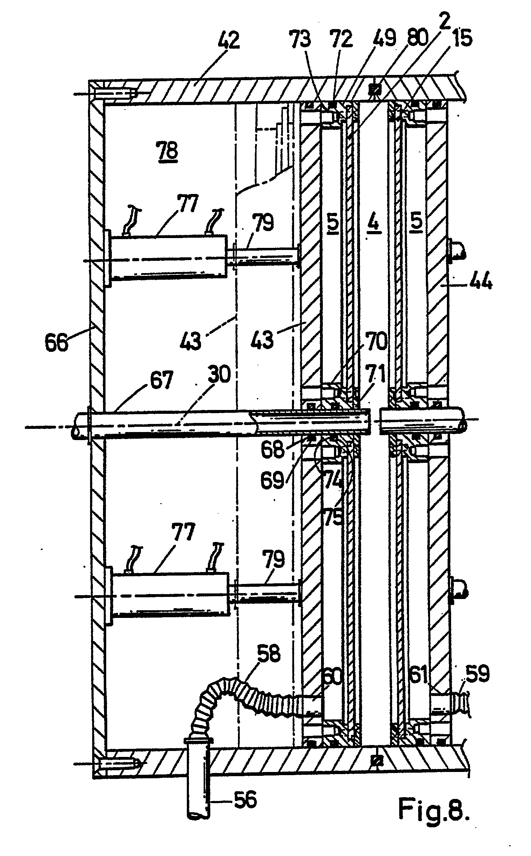

Dans l'exemple illustré sur la figure 7, chaque paroi frontale 43, 44 comprend un moyen de filtration sous la forme d'un treillis 2, 15 en matière rigide, par exemple en métal ou en matière plastique dure, ce moyen de filtration étant adjacent au compartiment de matière à filtrer 4 (voir figure 8). Dans l'exemple de réalisation illustré sur la figure 8 ce compartiment est unique pour deux compartiments de récolte de filtrat 5. Le moyen de filtration 2, 15 est supporté sur sa plaque frontale 43 ou respectivement 44 qui est disposée du côté du moyen de filtration 2, 15 qui est opposé au compartiment de matière à filtrer 4 correspondant et qui est capable de coulisser de manière étanche dans le cadre périphérique 42. Pour assurer cette étanchéité, un joint d'étanchéité 45 est par exemple logé dans une rainure périphérique 46 de la plaque de support 43, 44. Dans l'exemple de réalisation illustré, les plaques de support 43 et 44 sont agencées parallèlement l'une à l'autre et perpendiculairement à l'axe 30 des chambres de filtrage. Elles supportent les moyens de filtration 2, 15 à une certaine distance de leur face frontale extérieure 47, 48, par l'intermédiaire d'une bague d'écartement 49, 50. Pour la fixation de celles-ci sur la plaque de support correspondante, il est prévu des moyens de fixation, par exemples de trous 51 disposés le long du bord périphérique des plaques de support, des alésages taraudés internes 52 correspondants dans les bagues d'écartement 49, 50 et des vis de serrage non représentées coopérant avec les alésages taraudés 52 à travers les trous 51. Les moyens de filtration 2, 15 sont enserrés entre une bague d'écartement 49, 50 et un anneau de serrage extérieur 53 qui est fixé sur la bague d'écartement par des vis de serrage non représentées coopérant avec des alésages taraudés externes 54 de cette bague et passant à travers des trous prévus périphériquement sur l'anneau de serrage 53. Chaque moyen de filtration 2, 15 forme dans l'exemple illustré sur les figures 7 à 9, une face plane disposée et maintenue perpendiculaire à l'axe 30 des chambres de filtrage.

Dans l'exemple de réalisation représenté sur la figure 7, l'alimentation des compartiments de matière à filtrer 4 s'effectue par l'intermédiaire d'un conduit d'alimentation radial 55 qui traverse le cadre périphérique 42 à un endroit où il est situé en face du compartiment de matière à filtrer 4 lorsque la plaque de support 43 et son moyen de filtration 2 sont en position de retrait à l'intérieur de la plaque de filtrage 41 (comme représenté en traits mixtes sur la figure 8).

Le compartiment 5 formé entre chaque moyen de filtration rigide 2, 15 et sa plaque de support 43, 44 sert à la récolte du filtrat et des effluents de lavage et de compression .Ce compartiment est donc ici déplaçable avec son moyen de filtration. Dans l'exemple de réalisation illustré sur la figure 7, un conduit de sortie 56 traverse le cadre périphérique 42 en une position qui reste entre les deux plaques de support mobiles 43, 44 même dans leur position de retrait. Ce conduit 56 est raccordé, par l'intermédiaire d'un embranchement en T 57 et de deux conduits extensibles 58 et 59, par exemple des conduits flexibles disposés en hélice, des conduits en forme d'accordéon ou analogues, à des passages 60 et 61 prévus à travers les plaques de support 43 et 44. Ces passage mettent ainsi les compartiments de récolte 5 en communication avec le conduit de sortie 56 et permettent l'évacuation des effluents de lavage et du filtrat hors du filtre-presse.

Dans l'exemple de réalisation illustré sur la figure 7, les moyens permettant le déplacement des moyens de filtration 2, 15 sont constitués d'une source d'énergie non représentée, dans ce cas une source d'air sous pression, qui est mise en communication avec la chambre sous pression 62 formée entre les plaques de support 43, 44 et le cadre périphérique 42, par l'intermédiaire d'un ou de plusieurs conduits d'entrée et/ou de sortie d'air sous pression 81, agencés de manière à toujours déboucher dans la chambre 62 même en position de retrait des plaques de support 43 et 44. Par une modification de la pression à l'intérieur de la chambre 62 on peut ainsi écarter ou rapprocher les plaques de support 43 et 44. Des moyens d'arrêt non représentés peuvent éventuellement être prévus pour limiter le mouvement de coulissement axial des plaques de support 43 et 44 entre une position de retrait extrême et une position opposée extrême.

Dans la chambre 62 sont également prévus des moyens de guidage des plaques de support 43 et 44, qui garantissent un mouvement de translation parfait, en particulier de leurs moyens de filtration 2 et 15, suivant l'axe 30 des chambres de filtrage. Les moyens de guidage illustrés sur la figure 7 consistent en des barres 63, 64 articulées en leur centre, en croix, sur un axe de pivotement 65 perpendiculaire à l'axe 30 et fixé au cadre périphérique 42. Ces barres 63, 64 sont chacune articulées sur les deux plaques de support 43 et 44 par leurs extrémités.

Sur la figure 8 est illustrée un variante de réalisation de dispositif de filtrage suivant l'invention illustré sur la figure 7. La plaque de filtrage de gauche ne comprend qu'un seul moyen de filtration déplaçable 2, tandis.que, de l'autre côté, une paroi frontale 66 est reliée de manière fixe au cadre périphérique 42, par exemple par boulonnage. Une telle plaque de filtrage peut servir, comme c'est illustré sur la figure 8, de plaque d'extrémité dans un assemblage où les autres plaques de filtrage du filtre-presse comportent deux moyens de filtration déplaçables, ou on pourrait aussi prévoir un assemblage de plaques de filtrage telles que celle représentée à gauche sur la figure 8, de manière que chaque compartiment de matière à filtrer 4 soit formé d'un moyen de filtration 2 déplaçable et d'une paroi frontale fixe 66.

Sur la figure 8, les plaques de filtrage présentent une alimentation centrale. L'alimentation des compartiments de matière à filtrer 4 s'effectue par l'intermédiaire d'un conduit d'alimentation axial 67 qui sert simultanément de guidage pour les plaques de support 43, 44. L'étanchéité de la plaque de support 43 par rapport à la surface périphérique de conduit 67 est obtenue par un joint annulaire 68 logé dans une rainure circonférentielle interne 69 de l'ouverture centrale façonnée dans la plaque de support 43 pour le passage du conduit 67. Au centre une seconde bague d'écartement 70 est fixée sur la plaque de support 43, par des moyens de fixation identiques à ceux décrits pour la première bague d'écartement. Le moyen de filtration 2 présente lui aussi une ouverture centrale pour le passage de la bague d'écartement 70, et il est enserré entre la seconde bague d'écartement 70 et un second anneau de serrage 71 par des moyens de fixation identiques à ceux décrits pour le premier anneau de serrage 53.

La bague d'écartement 49 présente avantageusement elle aussi un joint d'étanchéité 72 logé dans une rainure périphérique externe 73 et la bague d'écartement 70 un joint d'étanchéité 74 logé dans une rainure circonférentielle interne 75.

Dans l'exemple de réalisation de plaque de filtrage illustré à gauche sur la figure 8, le conduit d'alimentation 67 est fixé sur la paroi frontale fixe 66 et son embouchure dans le compartiment de matière à filtrer 4 se situe légèrement en deçà du plan formé par le bord frontal 76 (voir figure 9) du cadre périphérique 42, de façon à laisser un passage pour la matière alimentée, entre les extrémités des conduits d'alimentation 67 des deux plaques de filtrage assemblées.

Comme on peut le voir sur la figure 8, les moyens de déplacement des moyens de filtration consistent ici en une source d'énergie motrice, dans ce cas une source d'énergie hydraulique non représentée, et en un ou plusieurs vérins 77 agencés dans la chambre 78 formée par la plaque de support 43 et la paroi fixe 66 et le cadre périphérique 42. Ces vérins alimentés en fluide hydraulique provenant de ladite source non représentée agissent sur le dos de la plaque de support 43 pour faire avancer ou reculer celle-ci de façon que le moyen de filtration 2 se déplace suivant un mouvement de translation le long de l'axe 30 et dans un plan perpendiculaire à ce dernier.

Le fonctionnement du dispositif de filtrage illustré sur les figures 8 et 9 est le suivant.

Dans la position représentée en traits mixtes, la paroi frontale 43 est en position de retrait extrême, à la suite du retrait des tiges de piston 79 des vérins 77. Cette position est la position de départ, dans laquelle les plaques de filtrage sont assemblées. L'assemblage est réalisé de manière étanche entre les plaques de filtrage par l'intermédiaire d'un joint annulaire 80 comprimé entre les deux bords frontaux 76 des plaques. La matière à filtrer est introduite dans chaque compartiment de matière à filtrer 4 par l'intermédiaire du conduit d'alimentation, dans ce cas le conduit axial 67.

Après le remplissage des compartiments de matière à filtrer 4, une précompression peut éventuellement intervenir avant le lavage, par réduction du volume des chambres de filtrage par déplacement des plaques de support 43, 44 des moyens de filtration l'une vers l'autre. La phase liquide c'est-à-dire le filtrat, s'écoule à travers les moyens de filtration 2, 15 et est recueillie dans les compartiments de récolte 5, d'où elle est évacuée par les passages 60, 61, les conduits extensibles 59, 58 et le conduit de sortie 56.

Ensuite de l'eau de lavage est introduite dans le compartiment de matière à filtrer 4, soit par le conduit d'alimentation 67 lui-même, soit par des conduits séparés, non représentés, débouchant dans les compartiments de récolte 5. Le soluté de lavage est évacué de la même façon que le filtrat.

La compression finale peut alors avoir lieu par un déplacement des moyens de filtration jusqu'à la position représentée sur la figure 8, c'est-à-dire légèrement en retrait à l'intérieur des plaques de filtrage. Les compartiments de matière à filtrer 4 sont alors réduits au volume minimum permis par la phase solide.

Le fonctionnement de la plaque de filtrage illustré sur la figure 7 est essentiellement le même, en dehors de l'alimentation radiale en matière à filtrer et de l'utilisation de moyens de déplacement pneumatiques.

On effectue ensuite le débâtissage du filtre-presse. Les plaques de filtrage sont donc désolidarisées et à ce moment le gâteau de filtration peut tomber, en tout cas partiellement, par exemple dans une trémie non représentée. Pour garantir une élimination totale du gâteau de filtration, les moyens de filtration 2, 15 sont avancés jusqu'à leur position extrême, par exemple celle représentée sur la figure 9, où ils sont arrêtés au-delà du plan formé par le bord frontal 76 du cadre périphérique 42. On peut aussi prévoir que la position extrême des moyens de filtration soit limitée à ce plan, ainsi qu'il est illustré sur la figure 7.

Comme on peut le constater pendant tous les déplacements des moyens de filtration et dans toutes leurs positions, ils sont maintenus dans une même position relative par rapport à l'axe 30 des chambres de filtrage, et dans un plan perpendiculaire à celui-ci. Il en résulte une compression de la matière à filtrer, qui est uniforme sur toute la section des chambres de filtrage et pendant toute la durée de la compression et éventuellement de la précompression, ce qui a pour effet un filtrage plus efficace.

L'agencement suivant les figures 7 à 9 permet lui aussi l'utilisation de moyens de filtration rigides en forme de plaques minces perforées, particulièrement lisses sur leur face orientée vers la chambre de filtrage. Non seulement ces moyens de filtration sont beaucoup plus résistants au vieillissement que les moyens de filtration souples jusqu'à présent utilisés, mais ils permettent aussi une évacuation aisée, par gravité, du gâteau de filtration obtenu, en particulier lorsqu'ils sont avancés en dehors de leurs plaques de filtrage.

Il doit être entendu que la présente invention n'est en aucune façon limitée aux formes de réalisation décrites ci-dessus et que bien des modifications peuvent y être apportées sans sortir du cadre du présent brevet.

On pourrait par exemple prévoir dans les formes de réalisation suivant les figures 1 à 4, un agencement où les cadres 9 et 11 seraient identiques et supporteraient chacun d'un côté une membrane 8 et de l'autre présenteraient une cloison rainurée 12, ce qui permettrait un agencement dans le même sens de toutes les chambres de filtrage.

On pourrait aussi prévoir un agencement le long d'un axe vertical des chambres. Le gâteau serait alors recueilli par gravité sur la membrane 8, lors du débâtissage, puis évacué par exemple par raclage. On pourrait aussi imaginer un déplacement latéral du cadre 6 entraînant avec lui le gâteau de filtration et la chute de ce dernier par gravité à côté du filtre-presse.

On peut aussi imaginer une évacuation unique de chambres adjacentes, par exemple en omettant la cloison séparatrice 12.

On peut enfin prévoir également, d'une manière connue en soi, un collecteur général pour toutes les chambres de filtrage.

On peut aussi imaginer dans des dispositifs tels que ceux illustrés sur les figures 1 à 4, d'autres moyens de réduction du volume des compartiments de matière à filtrer que des membranes souples. L'agencement de plaques frontales déplaçables par coulissement vers le moyen de filtration selon un agencement comparable au coulissement des plaques de support 43 et 44 sur les figures 7 à 9 est par exemple concevable.

Dans les formes de réalisation suivant les figures 7 à 9, on peut par exemple imaginer d'autres moyens de déplacement des moyens de filtration, par exemple des moteurs électriques, électro-magnétiques ou autres.

On pourrait aussi imaginer que les plaques 43 et 44 soient fixes, par exemple dans leur position représentée en traits mixtes sur la figure 8. Seul l'élément filtrant 2, 15 serait déplacé d'une manière appropriée quelconque en direction du compartiment de matière à filtrer 4 en occasionnant simultanément une augmentation du volume du compartiment de récolte 5.

On peut aussi imaginer que les moyens de filtration 2, 15 ne soient filtrants que sur une partie de leur surface, par exemple pour augmenter leur rigidité.

On peut aussi prévoir d'autres types de moyens de filtration indéformables que celui illustré sur la figure 5.

## Revendications

1. Dispositif de filtrage, du type filtre-presse à étape de compression, pour la filtration de liquides fermentescibles, en particulier de moût de brasserie, comprenant des plaques et éventuellement cadres assemblés formant entre eux des chambres de filtrage, des moyens de filtration (2, 15) séparant dans chaque chambre de filtrage un compartiment de matière à filtrer (4) d'un compartiment de récolte (5) de filtrat ou d'un soluté de lavage éventuel, au moins une entrée (7, 33, 55, 67) dans chaque compartiment de matière à filtrer (4) pour l'introduction, comme matière à filtrer, du liquide fermentescible susdit, des moyens de réduction du volume des compartiments de matière à filtrer (4) pour la compression de gâteaux de filtration formés au cours de la filtration, au moins une sortie (13, 56–61) pour évacuer le filtrat et le soluté de lavage de chaque compartiment de récolte (5) et des moyens d'évacuation hors du filtre-presse des gâteaux de filtration obtenus après la compression, caractérisé en ce que, comme moyens de filtration (2, 15), chaque chambre de filtrage comprend uniquement un milieu filtrant résistant et indéformable dans les conditions de fonctionnement du dispositif et présentant une position relative par rapport à l'axe (30) des chambres de filtrage qui est identique dans toutes les positions des moyens de filtration pendant toutes les étapes du filtrage, en ce que ce milieu filtrant comprend, du côté compartiment de matière à filtrer (4), des fils (21) en matériau dur, notamment métallique, présentant chacun une surface aplatie qui fait face audit compartiment, ces surfaces étant alignées dans un plan de manière à former, en dehors d'ouvertures de passage (19), une face lisse et plane (20) qui est en contact direct avec la matière à filtrer, et en ce que la dimension des ouvertures susdits (19) est de l'ordre de 50 à 400 μm, les ouvertures allant en s'élargissant en direction du compartiment de récolte du filtrat (5).

2. Dispositif suivant la revendication 1, caractérisé en ce que la face lisse et plane susdite (20) du moyen de filtration (2) est disposée dans un plan perpendiculaire à l'axe (30) de la chambre de filtrage correspondante.

3. Dispositif suivant l'une ou l'autre des revendications 1 et 2, caractérisé en ce que les compartiments de matière à filtrer (4) ont une dimension axiale allant de 30 à 80 mm.

4. Dispositif suivant l'une quelconque des revendications 1 à 3, caractérisé en ce que le moyen de filtration (2) est supporté sur un cadre indépendant (3).

5. Dispositif suivant l'une ou l'autre des revendications 3 et 4, caractérisé en ce que chaque compartiment de matière à filtrer (4) est limité frontalement entre un moyen de filtration (2, 15) et un moyen de réduction de volume (8, 10) du compartiment de matière à filtrer (4).

6. Dispositif suivant la revendication 5, caractérisé en ce que le moyen de réduction du volume (8, 10) du compartiment de matière à filtrer (4) est supporté sur une plaque ou cadre (6 et 9), dont le bord périphérique du côté du moyen de filtration (2, 15) est appliqué contre le bord opposé de la plaque ou cadre de support (3, 11) du moyen de filtration (2, 15), en position d'assemblage du filtre-presse, et en ce que ledit moyen de réduction de volume (8, 10) est imperméable à la matière à filtrer et est supporté à l'intérieur du cadre (6 et 9) à distance dudit bord périphérique et de manière déplaçable en direction dudit bord.

7. Dispositif suivant la revendication 5, caractérisé en ce que chaque chambre de filtrage comprend un cadre vide indépendant (6, 17) entre le moyen de filtration (2, 15) et le moyen de réduction du volume (8, 10) du compartiment de matière à filtrer (4) et un cadre ou plaque de support (9, 32) dudit moyen de réduction de volume (8, 10) et en ce que ce dernier est imperméable à la matière à filtrer et est supporté sur son cadre ou plaque de support (9, 32) de manière à pouvoir être déplacé à travers le cadre vide (6, 17), en position d'assemblage du filtre-presse.

8. Dispositif suivant l'une ou l'autre des revendications 6 et 7, caractérisé en ce que la plaque ou cadre (9, 32) supportant le moyen de réduction de volume (8) du compartiment de matière à filtrer (4) d'une chambre de filtrage supporte le moyen de réduction de volume (10) du compartiment de matière à filtrer (4) de la chambre de filtrage adjacente et en ce qu'éventuellement une entrée unique (33) pour l'introduction de la matière à filtrer est prévue pour ces deux dernières chambres de filtrage.

9. Dispositif suivant la revendication 8, caractérisé en ce qu'une cloison ou plaque (32) supportant les moyens de réduction de volume (8, 10) sépare les deux chambres de filtrage de façon à permettre le passage d'une alimentation en air comprimé entre ces moyens de réduction de volume (8, 10) et à éviter un déplacement inadéquat de ceux-ci.

10. Dispositif suivant l'une quelconque des revendications 5 à 9, caractérisé en ce que le ou les entrées (33) pour la matière à filtrer sont agencées dans leur compartiment de matière à filtrer (4) de façon à introduire la matière à filtrer tangentiellement aux moyens de réduction de volume (8, 10).

11. Dispositif suivant l'une quelconque des revendications 1 à 10, caractérisé en ce que le compartiment de récolte (5) du filtrat et du soluté de lavage formé dans une chambre de filtrage derrière chaque moyen de filtration (2, 15) sert également de compartiment de récolte (5) du filtrat et de soluté de lavage pour la chambre de filtrage adjacente.

12. Dispositif suivant l'une quelconque des revendications 7 à 11, caractérisé en ce que les moyens d'évacuation du gâteau de filtration comprennent des moyens permettant, durant le débâtissage du flitre-presse, d'incliner le cadre vide (6, 17), de soumettre ce dernier ou le gâteau à un choc ou de les faire vibrer.

13. Dispositif suivant l'une quelconque des revendications 1 à 4, caractérisé en ce que chaque compartiment de matière à filtrer (4) est limité frontalement entre un moyen de filtration (2) susdit, servant simultanément de moyen de réduction du volume de ce compartiment, et un autre moyen de filtration (15) ou respectivement une cloison ou paroi frontale rigide (66).

**Claims**

1. Filter device of the type of a filter press with a compression stage for the filtration of fermentable liquids, in particular brewery must, comprising connected plates and possibly frames which form filter chambers between one another, filtration means (2, 15) which separate, in each filter chamber, a compartment (4) for the material to be filtered from a compartment (5) for the collection of the filtrate or possibly a washing solute, at least one inlet (7, 33, 55, 67) into each compartment (4) for the material to be filtered for the introduction, as material to be filtered, of the fermentable liquid, means for reducing the volume of the compartments (4) for the material to be filtered for the compression of filter cakes formed during the filtration, at least one outlet (13, 56–61) for the removal of the filtrate and the washing solute from each collection compartment (5) and means for the removal of the filter cakes obtained after the compression from the filter press, characterized in that each filter chamber comprises, as a filtration means (2, 15), only one filtration medium which is resistant and cannot be deformed under the operating conditions of the device and has a relative position with respect to the axis (30) of the filter chambers which is identical in all the positions of the filtration means during all the filtration stages, in that this filtration medium comprises, on the side of the compartment (4) for the material to be filtered, wires (21) of hard material, in particular metal, each having a flattened surface which faces the said compartment, these surfaces being aligned in a plane so as to form, outside of passage openings (19), a smooth and flat surface (20) which is in direct contact with the material to be filtered and in that the dimension of the above openings (19) is approximately 50 to 400 µm, the openings becoming wider in the direction of the filtrate collection compartment (5).

2. A device as claimed in claim 1, characterized in that the smooth and flat surface (20) of the filtration means (2) is disposed in a plane perpendicular to the axis (30) of the corresponding filter chamber.

3. A device as claimed in one or other of claims 1 and 2, characterized in that the compartments (4) for the material to be filtered have an axial dimension ranging from 30 to 80 mm.

4. A device as claimed in any one of claims 1 to 3, characterized in that the filtration means (2) is supported by an independent frame (3).

5. A device as claimed in one or other of claims 3 and 4, characterized in that each compartment (4) for the material to be filtered is bounded at the front between a filtration means (2, 15) and means (8, 10) for reducing the volume of the compartment (4) for the material to be filtered.

6. A device as claimed in claim 5, characterized in that the means (8, 10) for reducing the volume of the compartment (4) for the material to be filtered is supported on a plate or frame (6 and 9) whose peripheral edge, on the side of the filtration means (2, 15), is applied against the opposite edge of the support plate or frame (3, 11) for the filtration means (2, 15) in the assembly position of the filter press, and in that this volume reduction means (8, 10) is impermeable to the material to be filtered and is supported within the frame (6 and 9) at a distance from this peripheral edge and such that it can be displaced in the direction of this edge.

7. A device as claimed in claim 5, characterized in that each filter chamber comprises an empty independent frame (6, 17) between the filtration means (2, 15) and the means (8, 10) for reducing the volume of the compartment (4) for the material to be filtered and a support frame or plate (9, 32) for the volume reduction means (8, 10) and in that the latter is impermeable to the material to be filtered and is supported on its support frame or plate (9, 32) so that it can be displaced across the empty frame (6, 17) in the filter press assembly position.

8. A device as claimed in one or other of claims 6 and 7, characterized in that the plate or frame (9, 32) supporting the means (8) for reducing the volume of the compartment (4) for the material to be filtered of one filter chamber supports the means (10) for reducing the volume of the compartment (4) for the material to be filtered of the adjacent filter chamber and in that a single inlet (33) is possibly provided for these two filter chambers for the introduction of the material to be filtered.

9. A device as claimed in claim 8, characterized in that a partition or plate (32) supporting the volume reduction means (8, 10) separates the two filter chambers so as to allow the passage of a compressed air supply between these volume reduction means (8, 10) and prevent an insufficient displacement thereof.

10. A device as claimed in any one of claims 5 to 9, characterized in that the inlet(s) (33) for the material to be filtered are arranged in their compartment (4) for the material to be filtered so that they introduce the material to be filtered tangentially with respect to the volume reduction means (8, 10).

11. A device as claimed in any one of claims 1 to 10, characterized in that the compartment (5) for the collection of the filtrate and the washing solute formed in a filter chamber behind each filtration means (2, 15) also acts as a compartment (5) for the collection of the filtrate and the washing solute for the adjacent filter chamber.

12. A device as claimed in any one of claims 7 to 11, characterized in that the means for the removal of the filter cake comprise means which allow the empty frame (6, 17) to be inclined during the dismantling of the filter press so that the empty frame or the cake can be subjected to an impact or can be vibrated.

13. A device as claimed in any one of claims 1 to 4, characterized in that each compartment (4) for the material to be filtered is bounded at the front between a filtration means (2) acting simultaneously as a means for the reduction of this compartment and a further filtration means (15) or a rigid partition or front wall (66).

**Patentansprüche**

1. Filteranlage vom Filterpressen-Typ mit schrittweiser Kompression zum Filtern gärbarer Flüssigkeiten, insbesondere von Bierwürze, mit Platten und evtl. Rahmenanordnungen, die unter sich die Filterkammern bilden, mit Filtereinrichtungen (2, 15), die in jeder Filterkammer ein Abteil (4) für zu filtrierendes Material von einem Gewinnungsabteil (5) für Filtrat oder einer evtl. Spüllösung trennen, mit wenigstens einem Einlaß (7, 33, 55, 67) in jedem Abteil (4) für zu filtrierendes Material zum Einführen der gärbaren Flüssigkeit, als zu filtrierendes Material, mit einer Einrichtung zur Verringerung des Volumens der Abteile (4) für zu filtrierendes Material, um die Filterkuchen zusammenzupressen, die während der Filtrierung gebildet werden, mit wenigstens einem Auslaß (13, 56–61) zum Ableiten des Filtrates und der Spülflüssigkeit aus jedem Gewinnungsabteil (5) und mit einer Einrichtung zum Entnehmen der Filterkuchen aus der Filterpresse, die nach dem Zusammenpressen erhalten werden, dadurch gekennzeichnet, daß als Filtereinrichtungen (2, 15) jede Filterkammer nur ein Filtriermittel aufweist, das während der Betriebszustände der Vorrichtung widerstandsfähig und unverformbar ist und eine Stellung relativ zu der Achse (30) der Filterkammern aufweist, die in allen Stellungen der Filtereinrichtungen während aller Filterschritte identisch ist, daß das Filtriermittel auf der Seite des Abteils (4) für zu filtrierendes Material Fäden oder Drähte (21) aus hartem Material, insbesondere aus Metall, aufweist, von denen jeder eine abgeflachte Oberfläche aufweist, die zu dem Abteil gerichtet ist, daß die Flächen in einer Ebene derart ausgerichtet sind, daß sie außerhalb von Durchgangsöffnungen (19) eine glatte und ebene Fläche (20) bilden, die in direktem Kontakt mit dem zu filtrierenden Material ist, daß die Ausdehnung der Öffnungen (19) in der Größenordnung von 50 bis 400 μm liegt und daß die Öffnungen sich in Richtung des Abteils (5) für die Gewinnung des Filtrates erweitern.

2. Anlage nach Anspruch 1, dadurch gekennzeichnet, daß die glatte und ebene Fläche (20) der Filtereinrichtung (2) in einer Ebene senkrecht zur Achse (30) der entsprechenden Filterkammer angeordnet ist.

3. Anlage nach dem einen oder dem anderen der Ansprüche 1 und 2, dadurch gekennzeichnet, daß die Abteile (4) für zu filtrierendes Material eine axiale Ausdehnung von 30 bis 80 mm aufweisen.

4. Anlage nach einem der Ansprüche 1 bis 3, dadurch gekennzeichnet, daß die Filtereinrichtung (2) an einem unabhängigen Rahmen (3) gehalten ist.

5. Anlage nach dem einen oder dem anderen der Ansprüche 3 und 4, dadurch gekennzeichnet, daß jedes Abteil (4) für zu filtrierendes Material stirnseitig zwischen einer Filtereinrichtung (2, 15) und einer Einrichtung (8, 10) zur Verringerung des Volumens des Abteils für zu filtrierendes Material (4) begrenzt ist.

6. Anlage nach Anspruch 5, dadurch gekennzeichnet, daß die Einrichtung (8, 10) zur Verringerung des Volumens des Abteils (4) für zu filtrierendes Material auf einer Platte oder einem Rahmen (6 und 9) abgestützt ist, deren bzw. dessen Umfangsrand auf der Seite der Filtereinrichtung (2, 15) gegen den gegenüberliegenden Rand der Stützplatte oder des Stützrahmens (3, 11) der Filtereinrichtung (2, 15) anliegt in zusammengebauter Stellung der Filterpresse anliegt, und daß die Einrichtung (8, 10) zur Verringerung des Volumens undurchlässig ist für zu filtrierendes Material und im Inneren des Rahmens (6 und 9) im Abstand zu dem Umfangsrand und verschiebbar in Richtung des Randes gehalten ist.

7. Anlage nach Anspruch 5, dadurch gekennzeichnet, daß jede Filterkammer einen leeren unabhängigen Rahmen (6, 17) zwischen der Filtereinrichtung (2, 15) und der Einrichtung (8, 10) zur Verringerung des Volumens des Abteils (4) für zu filtrierendes Material und einen Stützrahmen oder eine Stützplatte (9, 32) der Einrichtung (8, 10) für die Verringerung des Volumens aufweist und daß letztere undurchlässig ist für zu filtrierendes Material und auf ihrem Stützrahmen oder ihrer Stützplatte (9, 32) derart abgestützt ist, daß er durch den leeren Rahmen (6, 17) in zusammengebauter Stellung der Filterpresse verschoben werden kann.

8. Anlage nach dem einen oder dem anderen der Ansprüche 6 und 7, dadurch gekennzeichnet, daß die Platte oder der Rahmen (9, 32) zum Abstützen der Einrichtung (8) zur Verringerung des Volumens des Abteils (4) für zu filtrierendes Material einer Filterkammer die Einrichtung (10) zur Verringerung des Volumens des Abteils (4) für zu filtrierendes Material der benachbarten Filterkammer abstützt und daß evtl. ein einziger Einlaß (33) zum Einleiten des zu filtrierenden Materials für diese beiden Filterkammern vorgesehen ist.

9. Anlage nach Anspruch 8, dadurch gekennzeichnet, daß eine Trennwand oder Platte (32), die die Einrichtung (8, 10) zur Verringerung des Volumens abstützt, die beiden Filterkammern derart trennt, daß eine Druckluftzuführung zwischen die Einrichtungen (8, 10) zur Verringerung des Volumens möglich ist und eine unsachgemäße Verschiebung von diesen vermieden wird.

10. Anlage nach einem der Ansprüche 5 bis 9, dadurch gekennzeichnet, daß der oder die Einlässe (33) für zu filtrierendes Material in ihrem Abteil (4) für zu filtrierendes Material derart angeordnet ist, daß zu filtrierendes Material tangential zu den Einrichtungen (8, 10) zur Verringerung des Volumens eingeleitet wird.

11. Anlage nach einem der Ansprüche 1 bis 10, dadurch gekennzeichnet, daß das Abteil (5) zur Gewinnung des Filtrates und der Spülflüssigkeit, das in einer Filterkammer hinter jeder Filtereinrichtung (2, 15) angeordnet ist, gleichzeitig als Abteil (5) zur Gewinnung des Filtrates und der Spülflüssigkeit für die benachbarte Filterkammer dient.

12. Anlage nach einem der Ansprüche 7 bis 11, dadurch gekennzeichnet, daß die Einrichtung zur Entnahme des Filterkuchens eine Einrichtung aufweist, die während des Öffnens der Filterpresse das Schrägstellen des leeren Rahmens (6, 17) ermöglicht, um letzteren oder den Kuchen einem Stoß auszusetzen oder diese in Schwingung zu versetzen.

13. Anlage nach einem der Ansprüche 1 bis 4, dadurch gekennzeichnet, daß jedes Abteil (4) für zu filtrierendes Material stirnseitig zwischen einer Filtereinrichtung (2), die gleichzeitig als Einrichtung zur Verringerung des Volumens dieses Abteils dient, und einer anderen Filtereinrichtung (15) bzw. beiderseitig einer festen Trennwand oder Stirnwand (66) abgegrenzt ist.

Fig.1.

EP 0 207 555 B1

Fig.2.

Fig.4.

Fig.5.

Fig.3.

Fig.9.

Fig.6.

Fig.7

Fig.8.